# EUROPÄISCHE PATENTSCHRIFT

(11) **EP 0 788 615 B1**
(45) Veröffentlichungstag und Bekanntmachung des Hinweises auf die Patenterteilung: **18.09.2002**
(21) Anmeldenummer: 95937851.4
(22) Anmeldetag: 26.10.1995
(51) Int. Cl.: G02B 21/00, G01N 21/64

(54) **VERFAHREN UND VORRICHTUNG ZUR BESTIMMUNG STOFFSPEZIFISCHER PARAMETER EINES ODER WENIGER MOLEKÜLE MITTELS KORRELATIONS-SPEKTROSKOPIE**
METHOD AND DEVICE FOR DETERMINING SUBSTANCE-SPECIFIC PARAMETERS OF ONE OR A PLURALITY OF MOLECULES BY CORRELATION-SPECTROSCOPY
PROCEDE ET DISPOSITIF DE DETERMINATION DE PARAMETRES SPECIFIQUES D' UNE SUBSTANCE COMPORTANT UNE OU PLUSIEURS MOLECULES PAR SPECTROSCOPIE DE CORRELATION

(30) Priorität: 27.10.1994 DE 4438391
(43) Veröffentlichungstag der Anmeldung: 13.08.1997
(73) Patentinhaber: Evotec OAI AG, 22525 Hamburg (DE)
(72) Erfinder: GÜNTHER, Rolf, D-22769 Hamburg (DE)
(74) Vertreter: Meyers, Hans-Wilhelm, Dr.Dipl.-Chem.
(86) Internationale Anmeldenummer: EP9504213
(87) Internationale Veröffentlichungsnummer: WO96013744

(56) Entgegenhaltungen:
- EP-A- 0 507 628
- WO-A-91/04507
- US-A- 5 288 999
- SECOND INTERNATIONAL CONFERENCE OF NEAR FIELD OPTICS, RALEIGH, NC, USA, OCT. 1993, Bd. 57, Nr. 2-3, ISSN 0304-3991, ULTRAMICROSCOPY, FEB. 1995, NETHERLANDS, Seiten 169-172, DUNN R C ET AL 'Characterization of the temporal behavior of ultrashort pulses emerging from a near-field fiber probe'
- SCIENCE, 15 JULY 1994, USA, Bd. 265, Nr. 5170, ISSN 0036-8075, Seiten 364-367, AMBROSE W P ET AL 'Alterations of single molecule fluorescence lifetimes in near-field optical microscopy'
- NATURE, Bd. 37, Nr. 369, 5.Mai 1994 LONDON, Seiten 40-42, XP 000445873 J.K. TRAUTMANN ET AL. 'near-field spectroscopy of single molecules at room temperature'

## Beschreibung

Gegenstand der vorliegenden Erfindung ist ein Verfahren zur Bestimmung stoffspezifischer Parameter eines oder weniger Moleküle mittels Korrelations-Spektroskopie, sowie eine Vorrichtung zur Durchführung dieses Verfahrens.

Die WO 94/16313 beschreibt die Methode der Fluoreszenz-Korrelations-Spektroskopie (FCS) als Untersuchungsmethode. Durch eine konfokale Anordnung können extrem kleine Volumenelemente in einer Probe verschiedenster stofflicher Zusammensetzung untersucht werden. Durch Messung der spektroskopischen Parameter einzelner oder weniger Moleküle lassen sich somit Aussagen gewinnen, die Rückschlüsse auf die stoffliche Zusammensetzung dieser kleinen Volumenelemente erlauben. Diese Methode benötigt jedoch relativ niedrige Konzentrationen der zu untersuchenden Moleküle. Möchte man die Fluoreszenz-Korrelations-Spektroskopie auf Systeme übertragen, in denen relativ hohe Konzentrationen des zu messenden Moleküls herrschen, stößt die Methode an ihre Grenzen, da dann eine Fluktuationsanalyse nicht mehr möglich ist. Sind beispielsweise bei einem Messvolumen von 10⁻¹⁴ I, Konzentrationen von mehr als 1 µM der zu untersuchenden Moleküle vorhanden, ist die bislang angewendete Fluoreszenz-Korrelations-Spektroskopie ungeeignet.

Aus Fischer (J. Opt. Soc. Amb. B., Vol. 3, No. 10, pp. 1239 -1244, October 1986) ist bekannt, dass das Konzept der "surface-enhanced fluorescence spectroscopy" anwendbar ist, um kleine Änderungen in den optischen Eigenschaften der Mikroumgebung eines einzelnen kleinen Streuobjektes zu detektieren. Submikrometeröffnungen in dünnen, auf einem Objektträger aufgebrachten Silber- oder Goldfilmen werden hier verwendet, um die Eigenschaften der zu untersuchenden Lösung zu analysieren.

Srivastava und Badyopadhyay (Rev. Sci. Instrum. **61** (2), 1990) beschreiben eine Vorrichtung zur Messung der Photolumineszenz, welche optische Fasern verwendet, um die Excitations- und Emissionsstrahlung zu leiten. Dieses Spektrometer wird eingesetzt, um Photolumineszenzspektren mehrerer III-V-Komponenten zu bestimmen.

Miniaturisierte Untersuchungssysteme sind z. B. in DD 271953 A1 beschrieben. Eine Einrichtung zur automatischen photometrischen Analyse kleinster Probenmengen, mit der Transmissions- (Extinktions-) und Fluoreszenzmessungen durchgeführt werden können, ist dort offenbart. In einem Träger sind Wellenleiterbahnen implementiert, die mit ihrer Oberfläche zumindest in Abschnitten im optischen Kontakt mit mindestens einer Probe stehen. Für jede Wellenleiterbahn sind in dem Träger implementierte Mittel zur Einkopplung elektromagnetischer Strahlung in die Wellenleiterbahnen vorgesehen. Zur Integration in periphere Technik ist der Träger auf einem Transportmittel befestigt, das einen Kontakt mit Mitteln zur Probenvorbereitung und Nachbehandlung herstellt.

Keines der beschriebenen Verfahren ermöglicht jedoch die Erweiterung der Messgrenzen der Korrelations-Spektroskopie zu höheren Konzentrationen. Insbesondere ist auch keine miniaturisierte Vorrichtung zur Durchführung der Korrelations-Spektroskopie vorbeschrieben. Eine derartige Vorrichtung ist für die moderne Biotechnologie, insbesondere die evolutive Biotechnologie, wünschenswert.

Die der Erfindung zugrundeliegende Aufgabe besteht somit darin, ein leistungsfähiges Untersuchungssystem zu entwickeln, welches die Bestimmung stoffspezifischer Parameter von Molekülen in relativ hochkonzentrierten Lösungen mittels der Korrelations-Spektroskopie, Insbesondere der Fluoreszenz-Korrelations-Spektroskopie, ermöglicht. Dieses Untersuchungssystem sollte miniaturisierbar sein.

Überraschenderweise wird die der Erfindung zugrundeliegende Aufgabe gelöst durch ein Verfahren zur Bestimmung stoffspezifischer Parameter eines oder weniger Moleküle in einer Probe, in der das Molekül oder die Moleküle in der Probe mittels einer Strahlungsquelle (3) zur Erzeugung elektromagnetischer Strahlung zur Abgabe von Emmisionsstrahlung angeregt wird oder werden, die Excitationsstrahlung und/oder die Emissionsstrahlung des Moleküls oder der Moleküle von einem Detektor (5) zum Erfassen elektromagnetischer Strahlung aufgenommen wird, die Excitations- und/oder Emissionsstrahlung eine für die entsprechende Wellenlänge dieser elektromagnetischen Strahlung durchlässige Einrichtung (4) passiert, die zwischen einer Excitationsstrahlungsquelle (3) und der Probe und/oder der Probe und einem Detektor (5) angeordnet ist und die mindestens einen Bereich aufweist, dessen größte Ausdehnung senkrecht zur Ausbreitungsrichtung der Excitations- und/oder Emissionsstrahlung kleiner als die Wellenlänge der Excitations- und/oder Emissionsstrahlung ist, wobei die Bestimmung der stoffspezifischen Parameter des Moleküls oder der Moleküle in der Probe mittels Fluoreszenz-Korrelations-Spektroskopie erfolgt.

Dem erfindungsgemäßen Verfahren liegt das Prinzip der optischen Nahfeldmikroskopie zu Grunde. Normalerweise kann ein Lichtstrahl nicht auf einen Durchmesser fokussiert werden, der seine Wellenlänge wesentlich unterschreitet. Trifft er aber auf eine entsprechend kleine Blende, dringt das elektromagnetische Feld durch die Öffnung hindurch, klingt aber in weiterer Entfernung von der Blende sehr schnell ab.

Die erfindungsgemäß zu verwendende, für elektromagnetische Strahlung durchlässige Einrichtung weist vorzugsweise Bereiche in Form von Lochblenden oder Spaltblenden auf. Die Einrichtung weist Insbesondere Bereiche auf, die durch Lichtleiter mit fokussierenden optischen Elementen, wie Mikrolinsen, Gradientenlndexlinsen oder binären optischen Elementen optisch gekoppelt und/oder in den Lichtleiter integriert sind.

Sowohl das Anregungslicht als auch das emittierte Licht kann durch Lichtleiter gefiltert werden, insbesondere in Kombination mit fokussierenden Elementen. Das emittierte Licht, insbesondere das Fluoreszenzlicht, kann in einem derartigen Aufbau entweder über die gleiche Glasfaser wie das Anregungslicht - versehen mit einem Strahlenteiler - oder nach Einkopplung in einen weiteren Lichtleiter, einem geeigneten Detektor zugeführt werden.

Als Lichtquelle wird vorzugsweise ein Laser benutzt. Das Licht dieses Lasers wird durch eine Blende oder das "getaperte" (d.h. verjüngte) Ende einer Faser, deren Hülle optisch undurchlässig beschichtet ist, auf ein kleines Volumenelement fokussiert. Die Probe wird vorzugsweise in einer Durchflußkapillare oder einer stehenden Lösung (batch) gemessen. Zweidimensionale Anordnungen dieser "batches" sind vorzugsweise in Wafer angeordnet, wie sie in DE 43 22 147.5 beschrieben sind. Direkt an die Probenkammer schließt sich ein weiterer Spalt oder das getaperte Ende einer zweiten Faser an, der/das das Fluoreszenzlicht über einen geeigneten Filter auf das Detektorelement überträgt. Durch die Verwendung von fokussierenden Elementen kann die Qualität des Lichtstrahles verbessert werden, und eine Anordnung realisiert werden, die den gleichen Lichtweg für Anregung und Detektion benutzt. Dabei sind auch Kombinationen mit der herkömmlichen FCS denkbar, z.B. die Anregung mit der beschriebenen Faser und die Detektion über ein gewöhnliches Mikroskopobjektiv, oder umgekehrt.

Die Vorteile des erfindungsgemäßen Verfahrens sind insbesondere:
a) höhere Konzentrationen sind Messbar;
b) der Fokus eines Nahfeldmikroskopes ist wesentlich kleiner als der eines konventionellen Mikroskops (ca. 50 bis 100 nm gegenüber > 300 nm). Damit werden die Diffusionszeiten der Moleküle durch das Messelement kürzer und entsprechend geringere Messzeiten ermöglicht;
c) getaperte Fasern sind preisgünstiger als Mikroskopobjektive herzustellen;
d) je nach Durchmesser des Faserendes können evtl. mehrere Fasern um das Messvolumen, in dem das zu messende Molekül oder die Moleküle vorhanden ist (sind), gruppiert werden und erlauben so die Anregung oder Detektion bei verschiedenen Wellenlängen unter Verwendung einer Faser pro Wellenlänge;
e) es können mehrere Fasern gleichzeitig in beliebiger räumlicher Anordnung zueinander eingesetzt werden.
f) der kleinere Fokus führt zu einem geringeren Einfluß des Photobleichens ("Photobleaching") der Farbstoffmoleküle auf die Korrelationsfunktion. Dieser Vorteil kommt umso stärker zum Tragen, je langsamer die beobachteten Partikel diffundieren.

Eine weitere der Erfindung zugrundeliegende Aufgabe besteht darin, das Untersuchungssystem in miniaturisierter Ausführung bereitzustellen.

In der Optoelektronik verwendete Laser- und Leuchtdioden (LDs und LEDs) sind miniaturisierbar und lassen sich somit in geeigneter Weise als Lichtquelle benutzen. Vorzugsweise wird die Excitationsstrahlung von einer Einheit geliefert, die ein Halbleiteriaser oder ein frequenzvervielfachter Halbleiterlaser ist. Insbesondere werden Vorrichtungen bevorzugt eingesetzt, die mittels Wellenleitern, wie Glasfasern, verstärkte Lichtpulse liefern. Dazu gehören insbesondere Erbium-dotierte Glasfasern. Über einen miniaturisierten, getaperten Lichtwellenleiter wird somit das aus der aktiven Schicht ausgekoppelte Licht auf ein kleines Volumenelement fokussiert. Hierzu können ggf. zusätzlich Loch- oder Spaltblenden eingesetzt werden. Der Detektor wird hinter einer ähnlichen Optik plaziert, so dass die Foci übereinstimmen (konfokal). Der Winkel, unter dem die Anregungs- und Detektoroptik plaziert werden, ist dabei bellebig einstellbar. Besonders bevorzugt ist die Messung der Emissionsstrahlung von einer Detektionseinheit, wie einer als Photodiode geschalteten pin-Schicht, Lawinenphotodioden oder Photomultipliern. Für den Röntgenbereich werden Si:U, Ge:Li-Detektoren eingesetzt.

Unter Verwendung all dieser Elemente lässt sich eine FCS-Apparatur aufbauen, deren Komponenten auf einem Chip zusammengefaßt werden können und die mit den üblichen Mikrostrukturfertigungsverfahren hergestellt werden kann.

Neben den genannten Lichtquellen und Detektoren kommen refraktive oder diffraktive optische Elemente in Frage, die ähnlich wie Linsen Licht fokussieren. Die Apparatur kann somit sowohl mit konventioneller als auch mit Nahfeldoptik ausgelegt werden. Es kann völlig auf den Einsatz eines Mikroskopes verzichtet werden.

Für die Mikro-FCS-Varianten sind einander ähnliche Anordnungen möglich:
a) Senkrecht zum einfallenden Fluoreszenzlicht werden ein oder zwei Detektoren angebracht.
b) In Durchstrahlrichtung des Anregungslichtes wird alternativ ein zusätzlicher Detektor zur unter a) genannten Variante angebracht, oder dieser Detektor wird einzeln stehend, jeweils in Kombination mit einem geeigneten Filter angebracht.
c) Anordnung einer Vielzahl von Detektoren entlang einer Durchflußkapillare. Die Detektoren können so abgestimmt werden, dass die überlagerte Flußgeschwindigkeit in der Kapillare gerade kompensiert wird. Es ist auch möglich, in dieser Variante die ganze Kapillare auszuleuchten und die Beschränkung auf das kleine Raumvolumen nur durch die Detektoroptik vorzunehmen.
d) Ein sternförmig um die Kapillare angebrachtes Detektorenarray, dem das Fluoreszenzlicht mittels Lichtleitern zugeführt wird. Das Fluoreszenzlicht kann mittels eines Mikrolinsenarrays in die Fasern eingekoppelt werden.

Die Vorteile dieser Varianten sind:
1. Deutliche Verringerung der notwendigen Anzahl an Bauteilen.
2. Leichte Möglichkeit zum Aufbau einer parallelen FCS-Einheit.
3. Aus den verringerten Dimensionen ergibt sich eine Handhabbarkeit der FCS als Tischgerät, evtl. selbst als hochparallele Anlage.
4. Detektoranordnung nach lit c) ermöglicht die Analyse der zeitlichen Fluoreszenzänderung einer Probe.
5. Die sternförmige Detektoranordnung ermöglicht bei Verwendung mehrerer Lichtquellen die Miniaturisierung der Kreuzkorrelation.
6. Stark verringerte Produktionskosten in der Serienfertigung.
7. Die Integration eines derartig miniaturisierten FCS-Aufbaus in durch Mikrosystemtechnik geschaffenen Systemen (Flußreaktor, Peptidparallel-Synthese) ist realisierbar.
8. Reduktion der Streukapazität an Verstärkern und Regelelektronik durch die Integration dieser Einheiten direkt auf dem Chip. Damit einhergehend eine wesentliche Empfindlichkeitssteigerung der Mess-Elektronik.

Das erfindungsgemäße Verfahren verwendet vorzugsweise als elektromagnetische Strahlung der Emission und/oder Excitation solche mit Frequenzen, die im typischen Bereich der Chemic Lumineszenz, Kernfluoreszenz und Röntgenfluoreszent liegen.

Eine bevorzugte Anordnung der FCS ist die Fokussierung des Beobachtungsgebietes auf ein kleines Volumenelement, in dem einzelne Photonen gezählt und mittels Korrelationsanalyse ausgewertet werden. Es ist dabei nicht zwingend, dass die Photonen aus der Fluoreszenz eines Moleküls stammen. Für diesen Zweck können auch andere Quellen dienen. Zum Beispiel kann die Fluoreszenzlöschung durch Elektronenspinresonanz an einem Einzelmolekül nachgewiesen werden. Darüberhinaus sind weitere Prozesse einsetzbar, um Photonen zu liefern. Dafür kommen nichtlineare optische Effekte (Frequenzverdoppelung oder -verdreifachung (SHG oder THG), Summen- und Differenzfrequenz) In Frage. Die für eine effiziente Ausbeute nötigen Energiedichten sind in kontinuierlicher Anregung zwar schwer erreichbar, und könnten auch zu einer schnellen Zerstörung des Farbstoffes führen. In der DE 43 42 703 ist aber die Verwendung einer hochfrequent gepulsten Lichtquelle beschrieben. Damit lassen sich die vorstehend genannten Probleme vermeiden.

Die Entwicklung einer geeigneten FCS-Apparatur zur Ausnutzung innerer Niveaus erlaubt einen kleineren Fokus durch die verwendete geringere Wellenlänge.

Vorzugsweise ist eine Anzahl von Detektoren so angeordnet, dass das als Quelle der Emissionsstrahlung dienende Molekül bei Passieren der Detektoren in zeitlicher Korrelation mit dem Passieren beobachtet wird.

Das endungsgemäße Verfahren lässt sich insbesondere mit einer Vorrichtung durchführen, mit einer Einrichtung zum Aufnehmen der Probe (2), einer Excitationsstrahlungsquelle (3) zur Erzeugung elektromagnetischer Strahlung zum Anregen des Moleküls oder der Moleküle in einer Probe in einem Excitationsstrahlengang, einem Detektor (5) zum Erfassen von elektromagnetischer Strahlung in einem Emissionstrahlengang, einer im Strahlengang der Excitations- und/oder Emissionsstrahlung befindlichen, für die entsprechende Wellenlänge dieser elektromagnetischen Strahlung durchlässige Einrichtung (4), wobei diese Einrichtung (4) mindestens einen Bereich aufweist, dessen größte Ausdehnung senkrecht zur Ausbreitungsrichtung der Excitations- und/oder Emissionsstrahlung kleiner als die Wellenlänge der Excitations- und/oder Emissionsstrahlung ist, und elektronischen Schaltelementen (6,7), wobei die Excitationsstrahlungsquelle (3), die Einrichtung zum Aufnehmen der Probe (2), die durchlässige Einrichtung (4), der Detektor (5) und die elektronischen Schaltelemente (6,7) auf einem Substrat (1) angeordnet sind und die Vorrichtung Auswerteeinheiten zur Analyse der emittierten elektromagnetischen Strahlung mittels Fluoreszenz-Korrelations-Spektroskopie aufweist.

In einer bevorzugten Ausführung besteht das Substrat aus einem Wafer eines in der Mikroelektronik verwendeten Materials (etwa Si, SiO₂, Si₃N₄, GaAs). Die für die Steuerung des Lasers und für die Auswertung des Messsignals benötigte Elektronik wird bei dieser Variante monolithisch in den Wafer integriert. Insbesondere kann es sich bei dem Substrat auch um ein piezoelektrisches Element handeln.

Vorzugsweise ist der Detektor als Photodetektor ausgestaltet und am Boden eines das Substrat durchziehenden Kanals angeordnet. Die Excitationsstrahlungsquelle kann insbesondere in einem Winkel > 0 ≤ 180° zu der Detektionseinheit eingestrahlt werden.

Eine bevorzugte Ausführungsform der erfindungsgemäßen Vorrichtung ist dadurch gekennzeichnet, dass die Detektoreinheit als Multidetektoreneinheit ausgebildet ist.

Das erfindungsgemäße Verfahren zur Messung der zeitlichen Aufenthaltsdauer fluoreszenzmarkierter Moleküle durch Ausleuchtung und/oder konfokaler Abbildung kleiner Volumenelemente lässt sich durch unterschiedliche Vorrichtungen realisieren. Die in DE 43 42 703 beschriebene Vorrichtung mit Elementen der konfokalen Laserspektroskopie ist eine bevorzugte Möglichkeit.

Allerdings ist die Einsetzbarkeit der Vorrichtung technisch eingeschränkt:
- Es lassen sich nur Objekte analysieren, die in der optischen Messvorrichtung als Probe zugänglich gemacht werden können.
- Die teuren Herstellkosten der Messvorrichtung sind hinderlich.
- Die Gerätedimension ist unhandlich und eignet sich z.B. wenig für transportable Geräte.
- Eine massive Parallelisierung von Messvolumina ist aufwendig.
- Es werden kostspielige Lasersysteme verwendet.
- z.B. zur Messung bei höheren Konzentrationen sind Messvolumina >lambda zu groß.

Die erfindungsgemäße Vorrichtung setzt zur Lösung des oben genannten Nachteils eine integrierte Optik mit integrierten Laserlichtquellen (Laserdioden) ein. Hiermit ergeben sich Möglichkeiten, wie sie apparativ durch die Methoden der Nahfeldmikroskopie gegeben sind.

Wichtige Aspekte der Fluoreszenz-Korrelations-Spektroskopie (FCS) sind:
- Die konfokale Anordnung des Anregungsvolumens und des Messvolumens bei möglichst kleinen Volumina (<<10⁻¹² I).
- Die Auswertung des Lichtsignals durch Korrelationsmethoden unter Berücksichtigung der Diffusionszeiten der Translation und/oder der Rotation eines Moleküls im Messvolumen.

Bisher werden diese Anforderungen durch einen Aufbau unter Verwendung eines konfokalen Mikroskopes verwirklicht. Die Verwendung miniaturisierter Bauelemente oder die monolithische Integration vereinfachen die Messanordnung.

Der erfindungsgemäße miniaturisierte Aufbau, wie er in der erfindungsgemäßen Vorrichtung zum Ausdruck kommt, bezieht sich auf ein Substrat, in dem Anregungs- und Detektionseinheit konfokal Integriert werden.

In einer bevorzugten Ausführungsform weist das Substrat einen Kanal In Form einer Kapillare oder eines Spaltes auf, in den die zu untersuchende Flüssigkeit gegeben wird. Dort wird sie statisch oder im kontinuierlichen oder diskontinuierlichen Fluß analysiert. Eine solche Anordnung lässt sich typischerweise mit den aus der Halbleitertechnik bekannten chemischen oder Laser-Ätzverfahren herstellen, aber auch durch das LIGA-Verfahren. Dabei können sämtliche mit der Herstellungstechnik kompatible Materialien zur Anwendung kommen. Um den Kanal werden Anregungs- und Detektionseinheit konfokal gruppiert. Der Winkel zwischen den optischen Achsen der Anregungs- und der Detektionseinheit ist beliebig, solange sich die Achsen im gemeinsamen Brennpunkt schneiden.

Mit der erfindungsgemäßen Methode lassen sich sehr niedrige Konzentrationen (<10⁻¹²M) fluoreszierender Moleküle bestimmen. Das Verfahren wird jedoch umständlich und weniger praktikabel, wenn zu viele Zeiteinheiten bei unveränderten Raumkoordinaten eines oder mehrerer Messvolumen abgewartet werden muss, bis zufällig ein zu messendes Molekül das Raumelement des Messvolumens passiert. Dieses Problem Ist auch bei höheren Konzentrationen von Bedeutung (>10⁻¹²M), wenn die Diffusionszeiten sehr klein sind, wie dies z.B. bei Zellen und zellgebundenen Molekülen der Fall ist. Hier kann das Verfahren erfindungsgemäß so durchgeführt werden, dass dem eigentlichen Messverfahren ein Scan-Prozeß vorgeschaltet ist, bei dem die Raumkoordinaten solange in zeitlich kontinuierlicher oder diskontinuierlicher Art variiert werden, bis ein Signal der gewünschten Qualität erfaßt wird, z.B. das gemeinsame Auftreten einer korrelierten Fluoreszenz aus zwei Farben bei Verwendung der Kreuzkorrelationsmethode. Ist ein Messsignal erfaßt, wird erfindungsgemäß der Messvorgang gestartet. Die Verweilzeit eines Scanvorgangs kann weniger als eine Millisekunde pro Messvorgang betragen, um festzustellen, dass das einzelne Messvolumen oder die parallel vermessenen Messvolumina kein Molekül der gewünschten Charakteristik beinhalten. Bei dieser Vorgehensweise ist zu beachten, dass die durchschnittlichen charakteristischen Diffusionszeiten in ihrer absoluten Größe auf berechenbare Weise beeinflußt werden. Dies geschieht dadurch, dass z.B. fixierte Moleküle (z.B. auf fixierten Bakterienzellen) direkt und ausschließlich die zeitliche Variation der Veränderung der Raumkoordinaten des Messvolumens wiedergeben, oder bei beweglichen kleinen Molekülen und sprunghafter Veränderung der Raumkoordinaten ca. die Hälfte der durchschnittlichen Aufenthaltsdauer, da die Moleküle sich bei Beginn des Messvorgangs bereits innerhalb des Messvolumens befinden.

Scanning-Prozesse, die der eigentlichen Messung vorgeschaltet sind, sind dann bevorzugt, wenn Zellpopulationen analysiert werden sollen, wobei nur ein Bruchteil der Zellen Moleküle oder Molekülkomplexe mit den gewünschten Messeigenschaften tragen. Dies ist z.B. bei der Analyse evolutiv hergestellter Mutantenpopulationen rekombinanter Zellen der Fall, aber auch bei der Analyse mütterlichen Blutes auf die Anwesenheit kindllcher, kernhaltiger Erythrozyten, die auf bestimmte Erbanlagen oder Chromosomenanmomalien analysiert werden sollen.

Weitere Anwendungsbeispiele sind die funktionale Genomanalyse durch Verwendung von Phagen- oder Bakterien-Displaysystemen, sowie entsprechende Anwendungen in der evolutiven Biotechnologie. In beiden Ausführungsformen geht es um die Detektion und gezielte Selektion von Zellen oder Phagen mit spezifischen Bindungseigenschaften zu bestimmten Liganden vor einem Hintergrund nicht-reagierender Phagen oder Bakterien.

Die Anzahl durchgemusterter Volumenelemente steigt somit erheblich. In Kombination mit Kreuzkorrelation lassen sich somit im is bis nano-Sekundenbereich, im Einzel- und Multiarraybetrieb, viele Volumenelemente durchmustern. Die Verschiebung wird nur unterbrochen, wenn sich im erfaßten Volumenelement z. B. verschieden "farbige" Signale korreliert nachweisen lassen. Dann wird die Translationsdiffusionskonstante bestimmt. Diese Zeit ist um ein zu errechnendes Zeitelement (50 %) statistisch kürzer, verglichen mit dem Fall, dass ein Teilchen in das Volumenelement von sich aus oder durch erzwungene Diffusion eindringen muss. Ist ein Teilchen einmal erfaßt, kann es auch durch Scanning der unmittelbaren Umgebung ein zweites Mal erfaßt werden.

Die parallele Ausleuchtung mehrerer Volumenelemente mit konfokaler Optik ist bekannt. Parallele Ausleuchtung von Messvolumina, deren relative Abstände im ìm-Bereich liegen, gelingt durch die beschriebenen Vorrichtungen nicht oder nur unbefriedigend. Die erfindungsgemäß gewünschten Ausleuchtungen mit einer Dimensionierung im unteren im-Bereich und darunter gelingt erfindungsgemäß durch Verwendung holographischer Gitter. Parallel können umfangreiche Arrays kleiner Volumenelemente durch Einsatz holographischer Gitter oder binärer optischer Elemente ausgeleuchtet werden.

Die Messvolumina werden erfindungsgemäß konfokal entweder über die Verwendung mehrerer Lochblenden in Bildebene, durch Positionlerung von Multidetektorelementen in Bildebene oder durch Einsatz von Lichtfaserbündeln mit Einkopplung des Lichtes in Bildebene und Übertragung auf Photonen-Detektoren auf Fluoreszenzeigenschaften darin enthaltener Moleküle vermessen.

Bei der hochparallelisierten Ausleuchtung von kleinen Volumenelementen stellt sich das Problem der Registrierung der emittierten Fluoreszenzsignale aus den einzelnen Volumenelementen.

In der WO-A-94/16313 ist beschrieben, dass es möglich ist, kleine Raumelemente parallel auszuleuchten und die jeweiligen Fluoreszenzsignale individuell durch die Verwendung konfokaler Lochblendensysteme in Bildebene auf Multidetektoren abzubilden oder die Signale an der Position und anstelle der Lochblenden in Lichtleiter einzukoppeln und auf Detektorelemente zu leiten oder die Multidetektoren anstelle und in der Position der der Lochblenden selbst zu positionieren. Es wird auch die Möglichkeit beschrieben, ein größeres Volumenelement auszuleuchten und mit den oben beschriebenen konfokalen, parallelen Abbildungen kleiner Untervolumenelemente zu kombinieren.

Bei hoher Parallelisierung werden jedoch die Anforderungen an die Anzahl der Detektorarrays und der mit der parallelen Verarbeitung auflaufender Daten verbundene Rechenaufwand erheblich. Erfindungsgemäß werden diese Probleme dadurch gelöst, dass in einer weiteren Form der Koppelung kleiner, parallel ausgeleuchteter Messvolumina mit einer Registriervorrichtung die Signale über mehrere Messvolumina hinweg integriert erfaßt werden. Diese Vorgehensweise ist insbesondere bei solchen Anwendungen von Nutzen, bei denen
- eine Vielzahl von Volumenelementen durchgemustert werden soll
- der Rechenaufwand zugunsten der eingesetzten Rechenkapazität und der Rechendauer minimiert werden soll
- die Anzahl der pro Messung erfaßten Volumenelemente und somit das vermessene Gesamtvolumen maximiert werden soll
- Signale von Molekülen, Molekülkomplexen oder Zellen in hoher Verdünnung analysiert werden sollen
- die Präzision der ortsaufgelösten Erfassung von untergeordneter Bedeutung ist
- die Anzahl der ausgesandten Lichtquanten während der Diffusion durch ein einzelnes Messvolumen für eine Korrelation ausreichend ist.

Die Figur 1 zeigt in schematischer Form eine Aufsicht auf eine bevorzugte Vorrichtung zur Durchführung des erfindungsgemäßen Verfahrens, wie sie unter Verwendung der Nahfeldmikroskopie Verwendung findet.

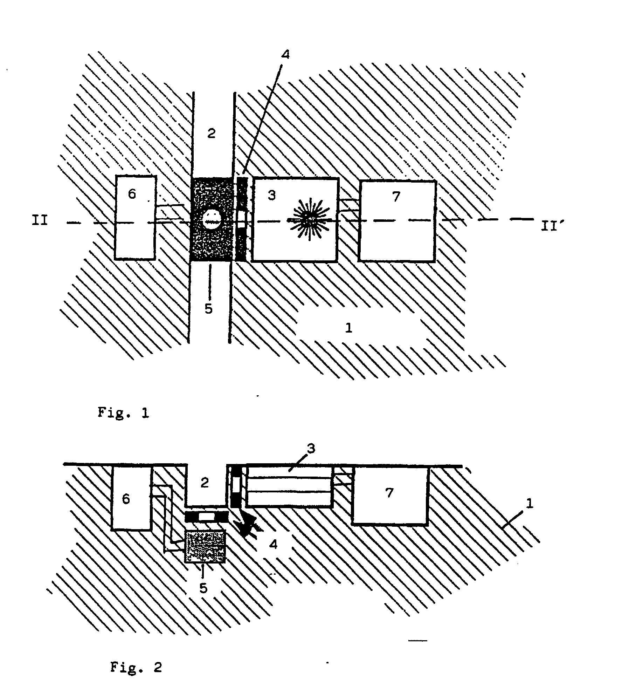

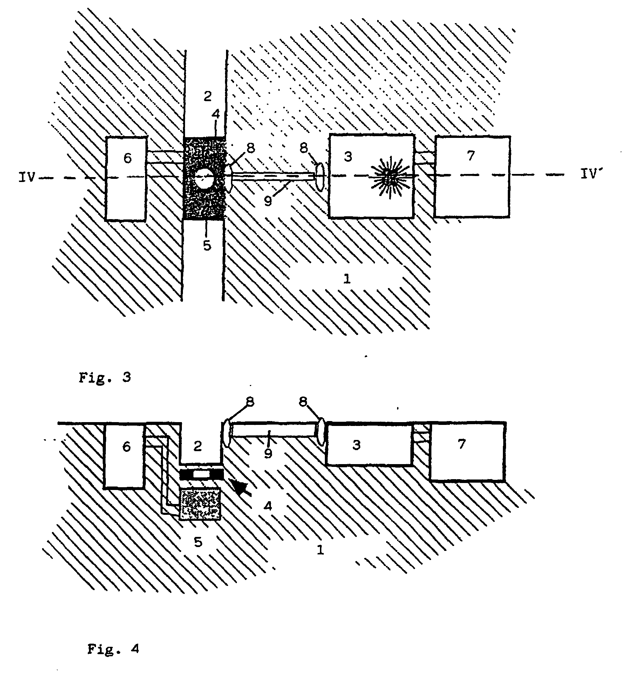

Die Figur 2 zeigt einen Schnitt durch die in Figur 1 gezeigte Ausführungsform längs der Linie II---II'. In dem Substrat 1, das beispielsweise ein Siliciumwafer sein kann, wird eine Kavität in Form einer Kapillare oder eines Kanals 2 geätzt. Die an einer Seite der Kapillare oder dem Kanal 2 angeordnete Laserdiode 3 ist von der Kapillare oder dem Kanal 2 durch eine Blende 4 getrennt. Unterhalb der Kapillare ist ein Detektor 5 angeordnet, der ebenfalls durch eine Blende 4 von der Kapillare oder dem Kanal 2 getrennt ist. Steuereinheiten wie der Detektor-Controller 6, der insbesondere die Spannungsversorgung des Detektors übernimmt, bzw. der Laserdiodentreiber 7 sind ebenfalls auf dem Chip integriert und mit den anzusteuernden Einheiten leitend verbunden. Vorzugsweise besteht die Blende 4 aus einem "pin-hole" (Lochblende) oder einem Spalt, dessen Größe kleiner ist als die Wellenlänge der verwendeten Excitationsstrahlung.

Die Figur 3 zeigt ebenfalls In schematischer Form eine Aufsicht auf eine weitere bevorzugte Vorrichtung zur Durchführung des erfindungsgemäßen Verfahrens.

Die Figur 4 zeigt einen Schnitt durch die in Figur 3 gezeigte Anordnung längs der Linie IV---IV'. Hier wird das von der Laserdiode 3 emittierte Licht durch eine Kollimationsoptik 8 (Mikrolinse) In einen Wellenleiter 9 eingekoppelt, an dessen Ende sich z. B. eine zweite Mikrolinse 8 befindet.

Letztere erzeugt den Fokus in dem Kanal 2, der mit dem durch die Blende 4 begrenzten Detektionsvolumen des Detektors 5 überlappt.

## Patentansprüche

1. Verfahren zur Bestimmung stoffspezifischer Parameter eines oder weniger Moleküle in einer Probe, in der
- das Molekül oder die Moleküle in der Probe mittels einer Strahlungsquelle (3) zur Erzeugung elektromagnetischer Excitationsstrahlung zur Abgabe von Emissionstrahlung angeregt wird oder werden,
- die Emissionsstrahlung des Moleküls oder der Moleküle von einem Detektor (5) zum Erfassen elektromagnetischer Strahlung aufgenommen wird,
- die Excitations- und/oder Emissionsstrahlung eine für die entsprechende Wellenlänge dieser elektromagnetischen Strahlung durchlässige Einrichtung (4) passiert, die zwischen der Excitationsstrahlenquelle (3) und der Probe und/oder der Probe und einem Detektor (5) angeordnet ist und die mindestens einen Bereich aufweist, dessen größte Ausdehnung senkrecht zur Ausbreitungsrichtung der Excitations- und/oder Emissionsstrahlung kleiner als die Wellenlänge der Ecxitations und/oder Emissionstrahlung ist,
**dadurch gekennzeichnet, daß**
- die Bestimmung der stoffspezifischen Parameter des Moleküls oder der Moleküle in der Probe mittels Fluoreszenz-Korrelations-Spektroskopie erfolgt.

2. Verfahren nach Anspruch 1, **dadurch gekennzeichnet, dass** die für elektromagnetische Strahlung durchlässige Einrichtung Bereiche in Form von Lochblenden oder Spaltblenden aufweist.

3. Verfahren nach mindestens einem der Ansprüche 1 und/oder 2, **dadurch gekennzeichnet, dass** die für elektromagnetische Strahlung durchlässige Einrichtung Bereiche aufweist, die durch Lichtleiter mit fokussierenden optischen Elementen, wie Mikrolinsen, Gradientenindexlinsen oder binären optischen Elementen optisch koppelbar und/oder in den Lichtleiter integrierbar sind.

4. Verfahren nach Anspruch 1 bis 3, wobei die elektromagnetische Strahlung der Emission und/oder Excitation Frequenzen hat, die im typischen Bereich der Chemilumineszenz, Kernfluoreszenz und Röntgenfluoreszenz liegt.

5. Verfahren nach mindestens einem der Ansprüche 1 bis 4, wobei die Wechselwirkung der Chemilumineszenz über Koppelung mit anderen physikalischen Effekten wie kernmagnetische Resonanz, elektrischen, magnetischen und elektromagnetischen Feldern (Spektrallinienaufspaltung), Frequenzverdoppelung (SHG, THG), Summen- und Differenzfrequenz, Vibrationseffekte, Koppelung mit Phononen der umgebenden festen Phase beispielsweise Oberflächenplasmonen als Emissionsstrahlung gemessen wird, oder wobei eine Kombination mit atomic force microscopy erfolgt.

6. Verfahren nach mindestens einem der Ansprüche 1 bis 5, wobei die Excitationsstrahlung von einer Einheit geliefert wird, die ein Halbleiterlaser oder ein frequenzvervielfachter Halbleiterlaser ist, wobei die erzeugten Lichtpulse gegebenenfalls mittels Wellenleitern, wie Glasfasern verstärkt sind.

7. Verfahren nach mindestens einem der Ansprüche 1 bis 6, wobei die Emissionsstrahlung von einer als Photodiode geschalteten pin-Schicht, Lawinenphotodioden oder Photomultiplier detektiert wird.

8. Verfahren nach mindestens einem der Ansprüche 1 bis 7, wobei die Quelle der zu detektierenden Strahlung, der Detektor der Strahlung, die Optik und Schaltungselemente auf einem Substrat angeordnet sind.

9. Verfahren nach mindestens einem der Ansprüche 1 bis 8, wobei eine Anzahl von Detektoren so angeordnet ist, dass das als Quelle der Emissionsstrahlung dienende Molekül bei Passieren der Detektoren in zeitlicher Korrelation mit dem Passieren beobachtet wird.

10. Verfahren nach mindestens einem der Ansprüche 1 bis 9, **dadurch gekennzeichnet, dass** zur Anregung elektromagnetische Strahlung mit Energien zwischen 284 und 543 eV verwendet wird.

11. Verfahren nach mindestens einem der Ansprüche 1 bis 10, **dadurch gekennzeichnet, dass** die Ausleuchtung von Messvolumina durch Verwendung von holographischen Gittern oder binären optischen Elementen erfolgt.

12. Vorrichtung zur Bestimmung stoffspezifischer Parameter nach einem der Ansprüche 1 bis 11, mit
- einer Einrichtung zum Aufnehmen der Probe (2),
- einer Excitationsstrahlungsquelle (3) zur Erzeugung elektromagnetischer Excitationsstrahlung zum Anregen des Moleküls oder der Moleküle in einer Probe in einem Excitationsstrahlengang,
- einem Detektor (5) zum Erfassen von elektromagnetischer Strahlung in einem Emissionsstrahlengang;
- einer im Strahlengang der Excitations- und/oder Emissionsstrahlung befindlichen, für die entsprechende Wellenlänge dieser elektromagnetischen Strahlung durchlässige Einrichtung (4), wobei diese Einrichtung (4) mindestens einen Bereich aufweist, dessen größte Ausdehnung senkrecht zur Ausbreitungsrichtung der Excitations- und/oder Emissionsstrahlung kleiner als die Wellenlänge der Excitations- und/oder Emissionsstrahlung ist, und elektronischen Schaltelementen (6,7)
**dadurch gekennzeichnet, dass** die Excitationsstrahlungsquelle (3), die Einrichtung zum Aufnehmen der Probe (2), die durchlässige Einrichtung (4), der Detektor (5) und die elektronischen Schaltelemente (6,7) auf einem Substrat (1) angeordnet sind und die Vorrichtung Auswerteeinheiten zur Analyse der emittierten elektromagnetischen Strahlung mittels Fluoreszenz-Korrelations-Spektroskopie aufweist.

13. Vorrichtung nach Anspruch 12, wobei die für elektromagnetische Strahlung durchlässige Einrichtung (4) Bereiche in Form von Lochblenden oder Spaltblenden aufweist.

14. Vorrichtung nach mindestens einem der Ansprüche 12 und/oder 13, wobei die für elektromagnetische Strahlung durchlässige Einrichtung (4) Bereiche aufweist, die durch Lichtleiter mit fokussierenden optischen Elementen, wie Mikrolinsen, Gradientenindexlinsen oder binären optischen Elementen optisch koppelbar und/oder in den Lichtleiter integrierbar sind.

15. Vorrichtung nach mindestens einem der Ansprüche 12 bis 14, wobei das Substrat ein Sillciumwafer ist.

16. Vorrichtung nach mindestens einem der Ansprüche 12 bis 15, wobei der Detektor (5) als Photodetektor ausgestaltet ist und am Boden eines das Substrat durchziehenden Kanals angeordnet ist und die Excitationsstrahlungsquelle in einem 0° < Winkel < 180° zu der Detektionseinheit eingestrahlt werden kann.

17. Vorrichtung nach einem der Ansprüche 12 bis 16, in der Anregungsund Detektionseinheit konfokal auf einem Substrat integriert sind. .

18. Vorrichtung nach mindestens einem der Ansprüche 12 bis 17, **dadurch gekennzeichnet, dass** die Detektoreeinheit (5) als Multidetektoreneinheit ausgebildet ist.

19. Vorrichtung nach einem der Ansprüche 12 bis 18, **dadurch gekennzeichnet, dass** das Substrat (1) ein piezo-elektrisches Element ist.

## Claims

1. A method for the determination of material-specific parameters of one or a few molecules in a sample in which
- the molecule or molecules in the sample are excited to emit emission radiation by means of a radiation source (3) for generating electromagnetic excitation radiation;
- said emission radiation from the molecule or molecules is received by a detector (5) for detecting electromagnetic radiation;
- said excitation and/or emission radiation passes a means (4) which is permeable to the corresponding wavelength of said electromagnetic radiation, which means is disposed between the excitation radiation source (3) and the sample and/or between the sample and a detector (5) and has at least one region the largest dimension of which perpendicular to the direction of propagation of said excitation and/or emission radiation is smaller than the wavelength of said excitation and/or emission radiation excitation;
**characterized in that**
- the determination of said material-specific parameters of said molecule or molecules in the sample is effected by means of fluorescence correlation spectroscopy.

2. The method according to claim 1, **characterized in that** said means which is permeable to electromagnetic radiation has regions in the form of pinhole apertures or slit diaphragms.

3. The method according to at least one of claims 1 and/or 2, **characterized in that** said regions are optically coupled with focussing optical elements, such as microlenses, gradient index lenses or binary optical elements, through optical waveguides and/or integrated into said optical waveguide.

4. The method according to claims 1 to 3, wherein the electromagnetic radiation of emission and/or excitation has frequencies within the typical range of luminescence, nuclear resonance fluorescence and X-ray fluorescence.

5. The method according to at least one of claims 1 to 4, wherein the interaction of luminescence is measured via coupling with other physical effects, such as nuclear magnetic resonance, generally electric, magnetic and electromagnetic fields (spectral line splitting), frequency doubling (SHG, THG), sum and difference frequency, vibration effects, coupling to phonons of the surrounding solid phase, for example, surface plasmons as emission radiation, or is combined with atomic force microscopy.

6. The method according to at least one of claims 1 to 5, wherein the excitation radiation is supplied by a unit which is a semiconductor laser or a frequency-multiplied semiconductor laser wherein the light pulses produced are optionally amplified by means of waveguides, such as glass fibers.

7. The method according to at least one of claims 1 to 6, wherein the emission radiation is detected by a pin layer connected as a photodiode, avalanche photodiodes or photomultipliers.

8. The method according to at least one of claims 1 to 7, wherein the source of the radiation to be detected, the detector for the radiation, the optics and circuit elements are arranged on a substrate.

9. The method according to at least one of claims 1 to 8, wherein a number of detectors are arranged in such a way that the molecule serving as the source of the emission radiation is observed, when passing the detectors, in a temporal correlation with this passing.

10. The method according to at least one of claims 1 to 9, **characterized in that** electromagnetic radiation having energies between 284 and 543 eV is used for excitation.

11. The method according to at least one of claims 1 to 10, **characterized in that** the illumination of measuring volumes is effected by using holographic grids or binary optical elements.

12. A device for the determination of material-specific parameters according to any of claims 1 to 11, comprising
- a means for receiving the sample (2);
- an excitation radiation source (3) for generating electromagnetic excitation radiation for exciting the molecule or molecules in a sample in an excitation beam path;
- a detector (5) for detecting electromagnetic radiation in an emission beam path;
- a means (4) disposed in the beam path of the excitation and/or emission radiation which is permeable to the corresponding wavelength of this electromagnetic radiation, said means (4) having at least one region the largest dimension of which perpendicular to the direction of propagation of said excitation and/or emission radiation is smaller than the wavelength of said excitation and/or emission radiation excitation; and
- electronic circuit elements (6, 7);
**characterized in that** said excitation radiation source (3), said means for receiving the sample (2), said permeable means (4), said detector (5) and said electronic circuit elements (6, 7) are arranged on a substrate (1), and the device comprises evaluation units for analyzing the emitted electromagnetic radiation by means of fluorescence correlation spectroscopy.

13. The device according to claim 12, wherein said means which is permeable to electromagnetic radiation (4) has regions in the form of pinhole apertures or slit diaphragms.

14. The device according to at least one of claims 12 and/or 13, wherein said means which is permeable to electromagnetic radiation (4) has regions which are optically coupled with focussing optical elements, such as microlenses, gradient index lenses or binary optical elements, through optical waveguides and/or integrated into said optical waveguide.

15. The device according to at least one of claims 12 to 14, wherein said substrate is a silicon wafer.

16. The device according to at least one of claims 12 to 15, wherein said detector (5) is designed as a photodetector and disposed at the bottom of a channel traversing the substrate and the excitation radiation can be irradiated at an angle of 0° < angle < 180° with respect to the detector unit.

17. The device according to at least one of claims 12 to 16, in which the excitation and detector units are integrated confocally on one substrate.

18. The device according to at least one of claims 12 to 17, **characterized in that** said detector unit (5) is designed as a multidetector unit.

19. The device according to any of claims 12 to 18, **characterized in that** said substrate (1) is a piezoelectric element.

## Revendications

1. Procédé destiné à déterminer les paramètres spécifiques à une substance donnée d'une molécule ou d'un petit nombre de molécules contenu(e) dans un échantillon dans lequel
- la molécule ou les molécules contenue(s) dans l'échantillon est ou sont stimulée(s) par une source de rayonnement (3) apte à produire un rayonnement d'excitation électromagnétique de manière à ce qu'elle(s) émette(nt) un rayonnement d'émission,
- le rayonnement d'émission de la molécule ou des molécules est capté par un détecteur (5) destiné à enregistrer le rayonnement électromagnétique,
- le rayonnement d'excitation et/ou d'émission traverse un organe (4) perméable à la longueur d'onde caractéristique de ce rayonnement électromagnétique, ledit organe étant situé entre la source de rayonnement d'excitation (3) et l'échantillon et/ou entre l'échantillon et un détecteur (5) et présentant au moins une partie dont la dimension maximale, mesurée perpendiculairement au sens de propagation du rayonnement d'excitation et/ou d'émission, est inférieure à la longueur d'onde du rayonnement d'excitation et/ou d'émission,
**caractérisé en ce que**
- les paramètres spécifiques à la substance de la molécule ou des molécules contenue(s) dans l'échantillon sont déterminés au moyen de la spectroscopie par corrélation de fluorescence.

2. Procédé selon la revendication 1, **caractérisé en ce que** l'organe perméable au rayonnement électromagnétique présente des parties réalisées sous forme de diaphragmes à trou ou de diaphragmes à fente.

3. Procédé selon au moins l'une des revendications 1 et/ou 2, **caractérisé en ce que** l'organe perméable au rayonnement électromagnétique présente des parties pouvant être couplées de manière optique, au moyen de guides d'onde optique, à des éléments optiques de focalisation tels que des micro-lentilles, des lentilles à gradient d'indice ou des éléments optiques binaires et/ou pouvant être intégrées dans le guide d'onde optique.

4. Procédé selon les revendications 1 à 3, **caractérisé en ce que** le rayonnement électromagnétique d'émission et/ou d'excitation présente des fréquences situées dans les gammes caractéristiques de la chimiluminescence, de la fluorescence nucléaire et de la fluorescence à rayons X.

5. Procédé selon au moins l'une des revendications 1 à 4, **caractérisé en ce que** l'interaction de la chimiluminescence est mesurée en tant que rayonnement d'émission soit par couplage avec d'autres effets physiques tels que la résonance magnétique nucléaire, les champs électriques, magnétiques et électromagnétiques (subdivision de raies spectrales), le doublage de fréquences (SHG, THG), la fréquence somme et la fréquence différence, les effets de vibration, soit par couplage avec des phonons de la phase solide entourante, par exemple des plasmons de surface, ou bien encore en combinaison avec la microscopie à force atomique (atomic force microscopy).

6. Procédé selon au moins l'une des revendications 1 à 5, **caractérisé en ce que** le rayonnement d'excitation est fourni par une unité qui est un laser à semi-conducteur ou un laser à semi-conducteur multiplié en fréquence, les impulsions de lumière étant, le cas échéant, amplifiées au moyen de guides d'ondes, tels que des fibres optiques.

7. Procédé selon au moins l'une des revendications 1 à 6, **caractérisé en ce que** le rayonnement d'émission est détecté par une couche de type PIN montée en photodiode, une photodiode à avalanche ou un photomultiplicateur.

8. Procédé selon au moins l'une des revendications 1 à 7, **caractérisé en ce que** la source du rayonnement à détecter, le détecteur du rayonnement, le système optique et les éléments du circuit sont disposés sur un substrat.

9. Procédé selon au moins l'une des revendications 1 à 8, **caractérisé en ce qu'**un nombre de détecteurs est disposé de manière à ce que la molécule constituant la source du rayonnement d'émission est observée en corrélation temporelle avec son passage devant les détecteurs.

10. Procédé selon au moins l'une des revendications 1 à 9, **caractérisé en ce que** l'excitation est effectuée par le biais d'un rayonnement électromagnétique dont l'énergie est comprise entre 284 et 543 eV.

11. Procédé selon au moins l'une des revendications 1 à 10, **caractérisé en ce que** l'éclairage des volumes mesurés est effectué par le biais de réseaux holographiques ou d'éléments optiques binaires.

12. Dispositif destiné à déterminer les paramètres spécifiques à une substance donnée selon l'une quelconque des revendications 1 à 11, comprenant
- un organe destiné à recevoir l'échantillon (2),
- une source de rayonnement d'excitation (3) apte à produire un rayonnement d'excitation électromagnétique destiné à stimuler la molécule ou les molécules contenue(s) dans un échantillon placé dans un trajet de rayons d'excitation,
- un détecteur (5) destiné à capter le rayonnement électromagnétique produit dans un trajet de rayons d'émission;
- un organe (4) situé dans le trajet des rayons du rayonnement d'excitation et/ou d'émission et perméable à la longueur d'onde caractéristique de ce rayonnement électromagnétique, ledit organe (4) présentant au moins une partie dont la dimension maximale, mesurée perpendiculairement au sens de propagation du rayonnement d'excitation et/ou d'émission, est inférieure à la longueur d'onde du rayonnement d'excitation et/ou d'émission, et
des éléments de circuit électroniques (6,7),
**caractérisé en ce que** la source du rayonnement d'excitation (3), l'organe destiné à recevoir l'échantillon (2), l'organe perméable (4), le détecteur (5) et les éléments de circuit électroniques (6,7) sont disposés sur un substrat (1) et que ledit dispositif est pourvu d'unités d'interprétation destinées à analyser le rayonnement électromagnétique émis au moyen de la spectroscopie par corrélation de fluorescence.

13. Dispositif selon la revendication 12, **caractérisé en ce que** l'organe perméable au rayonnement électromagnétique (4) présente des parties réalisées sous forme de diaphragmes à trou ou de diaphragmes à fente.

14. Dispositif selon au moins l'une des revendications 12 et/ou 13, **caractérisé en ce que** l'organe perméable au rayonnement électromagnétique (4) présente des parties pouvant être couplées de manière optique, au moyen de guides d'onde optique, à des éléments optiques de focalisation tels que des micro-lentilles, des lentilles à gradient d'indice ou des éléments optiques binaires et/ou intégrées dans le guide d'onde optique lui-même.

15. Dispositif selon au moins l'une des revendications 12 à 14, **caractérisé en ce que** le substrat est constitué par une plaquette de silicium.

16. Dispositif selon au moins l'une des revendications 12 à 15, **caractérisé en ce que** le détecteur (5) se présente sous la forme d'un photodétecteur disposé au fond d'un canal traversant le substrat et que la source de rayonnement d'excitation peut être dirigée de façon à former un angle d'arrivée supérieur à 0 degré et inférieur à 180 degrés par rapport à l'unité de détection.

17. Dispositif selon l'une des revendications 12 à 16 dans lequel les unités d'excitation et de détection sont intégrées à foyer commun sur un substrat.

18. Dispositif selon au moins l'une des revendications 12 à 17, **caractérisé en ce que** l'unité de détection (5) se présente sous la forme d'une unité de détection à détecteurs multiples.

19. Dispositif selon l'une des revendications 12 à 18, **caractérisé en ce que** le substrat (1) est un élément piézoélectrique.
